# EUROPÄISCHE PATENTANMELDUNG

(11) **EP 0 622 598 A1**
(43) Veröffentlichungstag der Anmeldung: **02.11.1994**
(21) Anmeldenummer: 94104048.7
(22) Anmeldetag: 16.03.1994
(51) Int. Cl.: F27D 15/02, C04B 7/47

(54) **Verfahren zum geregelten Austrag des bei einem Rostkühler durch den Rost nach unten fallenden staubförmigen Gutmaterials**

(30) Priorität: 02.04.1993 DE 4310849
(71) Anmelder: Klöckner-Humboldt-Deutz Aktiengesellschaft, D-51149 Köln (DE)
(72) Erfinder: Ramesohl, Hubert, Dipl.-Ing., D-51427 Bergisch Gladbach (DE)

(57) **Zusammenfassung**

Um für einen Rostkühler einen geregelten Austrag des durch den Rost (12) nach unten fallenden staubförmigen Gutmaterials mittels wenigstens eines Förderorgans (17) zu schaffen, das eine hohe Lebensdauer und insgesamt einen vergleichsweise niedrigen spezifischen Energiebedarf erwarten läßt, wird erfindungsgemäß vorgeschlagen, das Staub-Förderorgan (17) nicht kontinuierlich laufen zu lassen, sondern nur von Zeit zu Zeit, wobei der unterhalb des Kühlrostes (12) angeordnete Staubsammeltrichter (14), in dem der meiste Staub anfällt, mit Erreichung seines maximalen Staubfüllstandes (18) den Einschaltvorgang für das Förderorgan (17) steuert, wonach dieser Staubsammeltrichter (14) und anschließend über eine programmierte Steuerung alle anderen Staubsammeltrichter (15 etc.) ebenfalls staubentleert werden, wonach das Staub-Förderorgan (17) abgeschaltet und erst bei Erreichen des Maximal-Signals des zuerst sich wieder füllenden Staubsammeltrichters (14) wieder eingeschaltet wird.

## Beschreibung

Die Erfindung betrifft ein Verfahren zum geregelten Austrag des bei einem Rostkühler, insbesondere Schubrostkühler durch den Rost nach unten fallenden staubförmigen Gutmaterials, das über unterhalb des Kühlrostes angeordnete Staubsammeltrichter auf wenigstens ein Förderorgan aufgebracht und von diesem abtransportiert wird.

Bei einem Schubrostkühler besteht das Rostsystem aus einer Vielzahl von ortsfesten und beweglichen Rostplattenträgern, auf denen jeweils mehrere mit Kühlluftöffnungen versehene und im wesentlichen von unten nach oben von Kühlluft durchströmte Rostplatten befestigt sind. In Förderrichtung gesehen wechseln sich ortsfeste Rostplattenreihen mit hin- und herbeweglichen Rostplattenreihen ab, die über ihre entsprechend hin- und herbeweglichen Rostplattenträger auf einem oder mehreren längsbeweglich gelagerten angetriebenen Schubrahmen gemeinsam befestigt sind. Durch die gemeinsame oszillierende Bewegung aller beweglichen Rostplattenreihen wird das zu kühlende Gut, z. B. der aus einem Drehrohrofen austretende heiße Zementklinker, schubweise transportiert und dabei gekühlt (Sonderdruck S 7-321d "Kühlung von körnigem Schüttgut, z. B. Zementklinker, Erzen, Sinterpellets etc. der KHD Humboldt Wedag AG).

Der heiße Klinkerstaub, der beim Schubrostkühler durch die Kühlluftöffnungen der Rostplatten bzw. durch die Zwischenräume zwischen den Rostplatten gegen die Luftströmungsrichtung in den unteren Teil des Kühlers fällt, wird in sogenannten Staubsammeltrichtern aufgefangen, deren Anzahl sich nach der Länge des Rostkühlers richtet. Normalerweise sind z. B. 6 bis 20 Einzeltrichter vorhanden. Diese einzelnen Staubsammeltrichter sind unten am Gutauslaß durch Abschlußorgane wie Drehschieber, Zellenschleusen etc. verschließbar. Unterhalb der Austragsöffnungen der Staubsammeltrichter ist wenigstens ein Förderorgan, üblicherweise ein Schleppkettenförderer angeordnet, der den Staub in Längsrichtung unter dem Rostkühler zum Kühlerende auf den Klinkertransport fördert. In den Staubsammeltrichtern ist eine Staubfüllstandsanzeig-Meldeeinrichtung angeordnet, die den Maximal-Füllstand des Staubes anzeigt. Wird dieser Füllstand erreicht, öffnet über eine entsprechende Steuerungseinheit das unter diesem Staubsammeltrichter befindliche Verschlußorgan und der Staub läuft entweder zeitgesteuert eine gewisse Zeit aus dem Trichter oder aber so lange aus, bis eine Minimum-Staubfüllstandsanzeige erreicht wird, die das Abschlußorgan wieder verschließt. Ein Reststaubgehalt bleibt immer oberhalb des Abschlußorganes in den Staubsammeltrichtern und dient gleichzeitig als Verschlußstopfen gegen einen Luftaustritt während des Entleerungsvorganges bei den Staubsammeltrichtern. In bestimmten Sequenzen werden somit alle Staubsammeltrichter jeweils über ihre Maxmal-/Minimal-Anzeige entleert. Dabei laufen die Schleppkettenförderer zum Abtransport des Staubes kontinuierlich weiter, womit ein hoher Verschleiß und hoher Aufwand an Wartung und Antriebsenergie verbunden ist. Hinzu kommt, daß die kontinuierlich laufenden Schleppkettenförderer eine schnelle Überprüfung der Funktionstüchtigkeit (z. B. Dichtheit) des Rostbelages des Rostkühlers nicht zulassen.

Der Erfindung liegt die Aufgabe zugrunde, diese Nachteile zu vermeiden und für einen Rostkühler einen geregelten Austrag des durch den Rost nach unten fallenden staubförmigen Gutmaterials mittels wenigstens eines Förderorgans zu schaffen, das eine hohe Lebensdauer und insgesamt einen vergleichsweise niedrigen spezifischen Energiebedarf erwarten läßt.

Diese Aufgabe wird erfindungsgemäß mit den Maßnahmen des Kennzeichnungsteils des Anspruchs 1 gelöst.

Beim erfindungsgemäßen Verfahren zum geregelten bzw. gesteuerten Austrag des bei einem Rostkühler durch den Rost nach unten fallenden staubförmigen Gutmaterials läuft das über die Staubsammeltrichter mit Staub versorgte wenigstens eine Förderorgan nicht kontinuierlich, sondern es steht solange wie möglich und es läuft nur in kurzen Zeitintervallen. Dazu steuert der Staubsammeltrichter, in dem der meiste Staub anfällt bzw. der zuerst mit Staub volläuft, mit Erreichung seines maximalen Staubfüllstandes (Maximal-Anzeige) den Einschaltvorgang für das Förderorgan, d. h. mit Erreichung des maximalen Staubfüllstandes in diesem Staubsammeltrichter wird das Förderorgan eingeschaltet und dieser Staubsammeltrichter wird bis zum minimalen Staubfüllstand entleert und anschließend geschlossen. Dann werden über eine programmierte Steuerung alle anderen Staubsammeltrichter mit Vorteil nacheinander ebenfalls bis zum Erreichen des minimalen Staubfüllstandes entleert. Nachdem dann alle Staubsammeltrichter staubentleert sind, wird das Förderorgan bzw. werden alle Förderorgane für den Staubtransport abgeschaltet und erst bei Erreichung des Maximal-Signals des zuerst sich wieder füllenden Staubsammeltrichters wieder eingeschaltet. Als Beispiel sei angegeben, daß die aktive Einschaltzeit des wenigstens eines Förderorganes, z. B. Schleppkettenförderers oder Trogkettenförderers, z. B. ca. 15 Minuten und dessen Stillstandszeiten jeweils mehrere Stunden betragen können. Beim erfindungsgemäß ausgestatteten Rostkühler sind also die Stillstandszeiten des Förderorgans zum Abtransport des durchgefallenen Klipkerstaubes deutlich länger als dessen Betriebszeiten, was die hohe Lebensdauer des Staubförderers zur Folge hat.

Nach einem weiteren Merkmal der Erfindung kann die Häufigkeit des Einschaltens des Staub-Förderorgans bzw. eine Abweichung vom normalen Schaltrhythmus als Signal für die Funktionstüchtigkeit (insbesondere Staubdichtheit) des Rostbelages des Rostkühlers genutzt werden.

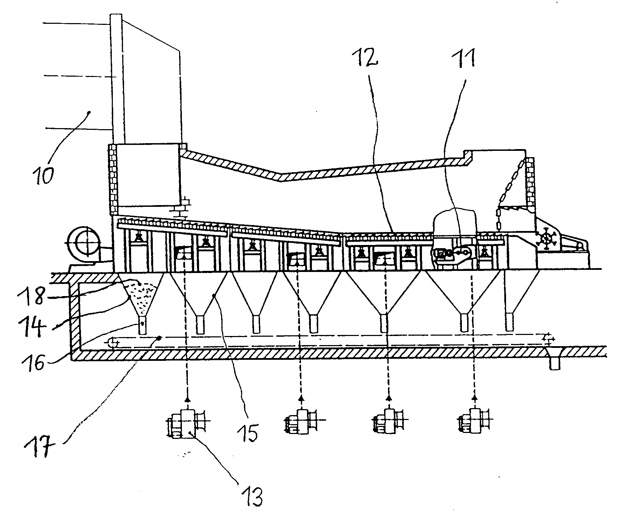

Die Erfindung und deren weitere Merkmale und Vorteile werden anhand des in der Zeichnung schematisch dargestellten Ausführungsbeispieles näher erläutert.

Die Zeichnung zeigt schematisch einen Vertikallängsschnitt durch einen Schubrostkühler zur Kühlung von aus einem Drehrohrofen (10) ausgetragenen glühend heißem Zementklinker. Ortsfest bleibende Rostplattenträger, auf denen die ortsfest bleibenden Rostplatten befestigt sind, wechseln sich mit hin- und herbeweglichen Rostplattenträgern ab, auf welchen die entsprechend hin- und herbeweglichen Rostplatten befestigt sind und welch letztere auf hin- und herbeweglichen Schubrahmen gemeinsam befestigt sind, wobei durch die gemeinsame oszillierende Bewegung aller Schubrahmen und damit aller beweglichen Rostplattenreihen mit Hilfe des Pendelantriebes (11) das nicht dargestellte zu kühlende Gut auf dem Kühlrost (12) schubweise von links nach rechts transportiert und dabei gekühlt wird. Durch die Perforierungen in den Rostplatten strömt von unten nach oben Kühlluft, die von unten über Kühlluftgebläse (13) in das Kühlergehäuse eingeführt wird. Der heiße Klinkerstaub, der durch die Rostplattenöffnungen hindurch bzw. durch die Zwischenräume zwischen den Rostplatten entgegen der Luftströmungsrichtung nach unten in den unteren Teil des Rostkühlers fällt, wird von mehreren unterhalb des Kühlrostes (12) angeordneten Staubsammeltrichtern (14, 15 etc.) gesammelt. Diese Staubsammeltrichter (14, 15 usw.) sind durch geeignete Abschlußorgane (16) wie z. B. Drehschieber, Muschelschieber, Zellenschleuse etc. verschließbar und sie können je nach Stellung der Abschlußorgane den jeweils gesammelten Staub auf ein Förderorgan (17) ablegen, z. B. auf einen Schleppkettenförderer oder Trogkettenförderer, der den Staub in Längsrichtung unter dem Rostkühler zum rechten Ende des Kühlers auf den Klinkertransport fördert. Ein Reststaubgehalt bleibt immer oberhalb des jeweiligen Abschlußorganes (16) im jeweiligen Staubsammeltrichter (14, 15 etc.) und dient gleichzeitig als Verschlußstopfen gegen einen Kühlluftaustritt während des Auslaßvorganges.

Erfindungsgemäß steuert der Staubsammeltrichter, in dem der meiste Staub anfällt, beim Ausführungsbeispiel der Staubsammeltrichter (14), mit Erreichung seines maximalen Staubfüllstandes (18) [Maximal-Anzeige] den Einschaltvorgang für das Förderorgan (17), und der Staubsammeltrichter (14) wird bis zum minimalen Staubfüllstand entleert und durch weitere Betätigung des Abschlußorganes (16) anschließend wieder geschlossen. Dann werden über eine programmierte Steuerung alle anderen Staubsammeltrichter (15 etc.) ebenfalls bis zum Erreichung des minimalen Staubfüllstandes entleert. Dieser Staubentleerungsvorgang aller Staubsammeltrichter kann relativ kurzfristig ablaufen, z. B. innerhalb von 15 Minuten. Nachdem alle Staubsammeltrichter staubentleert sind, wird das Steuerorgan (17) abgeschaltet und erst bei Erreichen des Maximal-Signals (18) des zuerst sich wieder füllenden Staubsammeltrichters (14) wieder eingeschaltet. Die jeweiligen Stillstandszeiten des Förderorgans (17) können bei modernen Rostkühlern jeweils mehrere Stunden betragen, mit der Folge, daß ein erfindungsgemäß ausgestatteter Schubrostkühler zumindest hinsichtlich seiner Staubtransporteinrichtung über viele Jahre wartungsfrei bleiben kann.

Die Häufigkeit des Einschaltens des Staub-Förderorgans (17) bzw. eine Abweichung vom normalen Schaltrhythmus kann als Signal für die Funktionstüchtigkeit (insbesondere Staubdichtheit) des Rostbelages (12) des Rostkühlers genutzt werden, d. h. die Einschalthäufigkeit kann als Indikator bei der Überwachung und Wartung eines erfindungsgemäß ausgerüsteten Rostkühlers herangezogen werden. In jedem Fall wird beim erfindungsgemäßen Rostkühler, dessen Staub-Förderorgan (17) nur von Zeit zu Zeit läuft, Energie gespart, und die Verschleißgrenze des Staub-Förderorgans (17) wird zeitlich wesentlich hinausgeschoben.

## Patentansprüche

1. Verfahren zum geregelten Austrag des bei einem Rostkühler, insbesondere Schubrostkühler durch den Rost (12) nach unten fallenden staubförmigen Gutmaterials, das über unterhalb des Kühlrostes (12) angeordnete Staubsammeltrichter (14, 15 etc.) auf wenigstens ein Förderorgan (17) aufgebracht und von diesem abtransportiert wird, gekennzeichnet durch folgenden Schritt:
a) der Staubsammeltrichter (14), in dem der meiste Staub anfällt, steuert mit Erreichung seines maximalen Staubfüllstandes (18) [Maximal-Anzeige] den Einschaltvorgang für das Förderorgan (17), und der Staubsammeltrichter (14) wird bis zum minimalen Staubfüllstand entleert und anschließend geschlossen;
b) dann werden über eine programmierte Steuerung alle anderen Staubsammeltrichter (15 etc.) ebenfalls bis zum Erreichen des minimalen Staubfüllstandes entleert;
c) nachdem alle Staubsammeltrichter staubentleert sind, wird das wenigstens eine Förderorgan (17) für den Staubtransport abgeschaltet und erst bei Erreichen des Maximal-Signals des zuerst sich wieder füllenden Staubsammeltrichters (14) wieder eingeschaltet.

2. Verfahren nach Anspruch 1, dadurch gekennzeichnet, daß die Häufigkeit des Einschaltens des Staub-Förderorgans (17) bzw. eine Abweichung vom normalen Schaltrhythmus als Signal für die Funktionstüchtigkeit des Rostbelages (12) des Rostkühlers genutzt wird.
